# EUROPEAN PATENT APPLICATION

(11) **EP 2 568 252 A1**
(43) Date of publication of application: **13.03.2013**
(21) Application number: 11180283.1
(22) Date of filing: 06.09.2011
(51) Int. Cl.: G01B 11/00, G01B 17/00, G01F 17/00

(54) **Method and a device for accurate measuring of volume of timber**

(71) Applicant: HM Puidukaubandus OÜ, 92411 Kärdla, Hiiumaa (EE)
(72) Inventor: Ilumets, Andrus, 92411 Kärdla, Hiiumaa (EE)
(74) Representative: Nelsas, Tónu

(57) **Abstract**

The object of the invention is to provide a method and a device for measuring a load of a vehicle, particularly measuring a volume of timber and processing data thereof. The invention allows the user to automate and optimise the administration and management of warehouse through modern and continuously improved measurement assets. In the first stage of the method the vehicle is being identified then it is allowed to enter into the measuring enviroment where the vehicle is being weighed, volume is being scanned and filmed. After measuring the received data is being processed and final load coefficients, timber type and the risk of rot are being set. Control computer issues the label for the load on the paper and allows the vehicle to enter into the warehouse. After leaving the warehouse the vehicle is re-weighted and the control computer issues a cargo declaration and simultaneously the electronic cargo declaration is sent through administrative program located in a server to the vehicle owner warehouse manager and other parties set by the user. All the quantities, assortments prices are visible in real time through the server to the user of the invention.

## Description

### Field of invention

The invention includes a method and apparatus, the objectives of which are the measuring of a vehicle's load, more precisely timber in the form of a load of logs, using measuring devices that do not involve the direct involvement of people. The invention provides a user operating in the field of forestry logistics with the opportunity to automate and optimise the measuring of timber volume, data processing, warehouse administration and its management. This method and apparatus belong to the field of forestry logistics and information technology.

### Backround of the Invention

Determination of timber volume performed by people through the use of a coefficient determined through observation and the size of a load measured by hand is known and used method in prior art. The use of such a method does not provide precise data on the volume of a load, and frequently differs from the actual volume of logs. In connection with the slow movement of data, obtaining an overview of the current warehouse level is difficult, is accompanied by expensive administrative work, and warehouse administration also requires the continuous presence of personnel. In general, the likelihood that mistakes will be made using this known method is quite high.

US 5 267 018 discloses a method and equipment for measuring a timber load. Disclosed in the given patent are the method and equipment, in which the results are calculated based on the results of the load's external measurements, the load's average diameter, and the results of the measurements of timber length. The load does not have to be removed from the means of transport in order to obtain the desired results; instead, the measurements are taken when the vehicle passes through the measuring points. The main purpose of the invention is the recognition of external logs and the recognition of log ends, on the basis of which the average load volume can be calculated. Measuring is based on the analysis of curves appearing on the screen. Curves appear on the screen following illumination of the logs with a beam of light.

A notable shortcoming in the US patent is the placement of lasers. Lasers are installed at specific angles and are focused in one direction, which results in the load only being illuminated from one side, which means that if the vehicle is pulling a trailer with a second load then the equipment and method in question will be unable to calculate the precise volume of the load, since it is not possible to take a picture from the end of the load being carried by the vehicle. In addition, the measuring process takes place with a moving vehicle, where large vibrations may appear, accompanied by inaccuracies.

In the prior art an apparatus and method are also disclosed, in which the load must be removed from the vehicle in order to measure the volume, WO 89/07749.

### Summary of the Invention

The purpose of the invention is to offer a method and apparatus for precisely measuring a load of logs on a vehicle, and to create the accompanying data processing system. The given method may be performed with the aid of measuring devices and information technology equipment. Further, purpose of the invention is to present a solution which offers the user a means with which to organise their wood warehouse, increase the efficiency of their receiving and issuing process, and eliminate various errors that are inherent to this type of work. It allows for the warehouse administration of timber (increasing the precision of measuring devices and being open 24 hours without direct labour expenditures) to be automated and optimised, increases the transparency and efficiency of the mediation of timber between various parties, and enlivens the trading of timber through different means of communication.

This invention includes the following stages:
- the person that brought/picked up the goods is identified via a apparatus permitting electronic identification and if permission to enter is granted by the apparatus, a green light is illuminated in the traffic light located on the outside wall of the measuring environment and the measuring environment door is opened. The vehicle is able to enter the measuring environment, which is an enclosed area equipped with scanners and cameras, and the floor of which is an electronic heavy goods vehicle scale, through the automatic doors controlled by the electronic vehicle identification apparatus and sensors. In addition, there is a monitor, a liquid cristal display (LCD) and a control computer in the room;
- In the measuring environment, the logging truck's total mass is registered, and the goods and the vehicle are scanned, filmed and photographed;
- at the same time, the driver enters additional information about the load via a touch screen; for example, the driver's name (using, for example, an ID card), the carrier's name, order number, etc.
- the data obtained from scanners, cameras and scale is forwarded to the control programme in the control computer, which processes the data and designates the volume of the load, fixing the coefficients characterising the load, the assortment of goods and threat of rot, saves the processed data systematically in the control computer, and displays further instructions on the screen for the driver;
- after which the control computer issues cargo slips to the driver, displays the place of unloading in the warehouse assigned by the control programme, opens the measuring environment's doors, and the vehicle may enter the warehouse;
- upon departure of the vehicle from the warehouse, the kerb mass of the vehicle is registered and the mass of the load delivered to the warehouse is obtained from the difference between the masses. The process takes place in reverse when goods are issued;
- after which the control computer issues, with the aid of a printer, a paper format cargo declaration to the driver, while at the same time an electronic cargo declaration is sent through the data communication network, which it is possible, in turn, to forward to the vehicle's owner, warehouse administrator and other parties, in accordance with the parameters set by the owner of the patent;
- the entire measurement system is run by the control programme, which is located in the control computer and is connected to the electronic identification system, cameras and sensors (scale and scanners) performing the measurement in the measuring environment;
- the control programme, in turn, is run by the administrative programme located in the server, and the exchange of data between the two takes place via the data communication network.

### List of illustrations

Figure 1 shows a side view of the measuring apparatus upon entry into the warehouse.
Figure 2 shows a side view of the measuring apparatus upon exiting the warehouse.

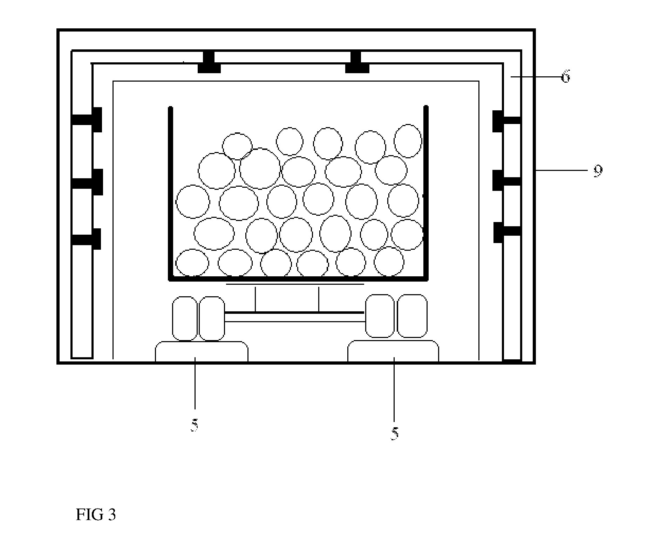

Figure 3 shows a direct view of the measuring environment.

### Detailed description of the Invention

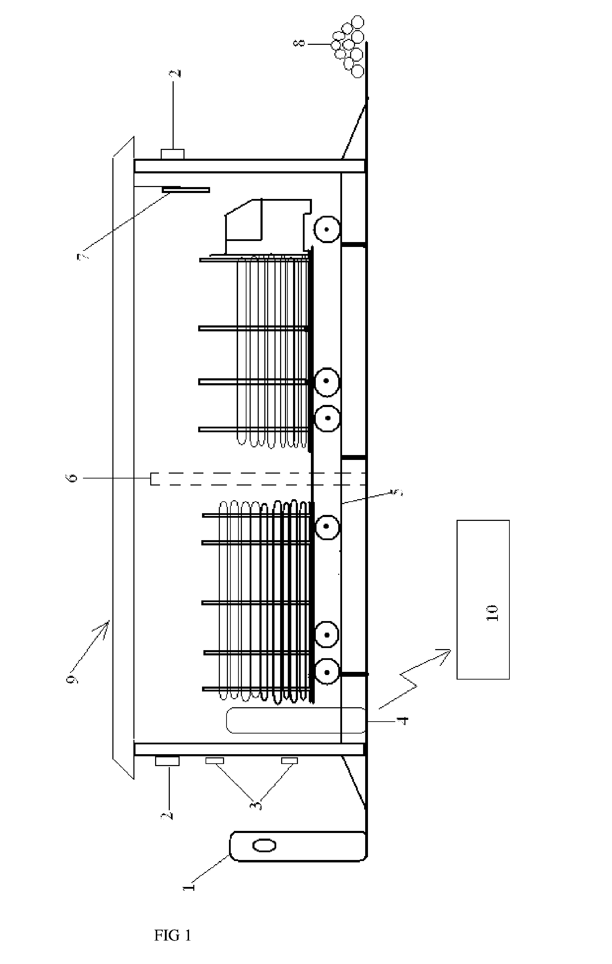

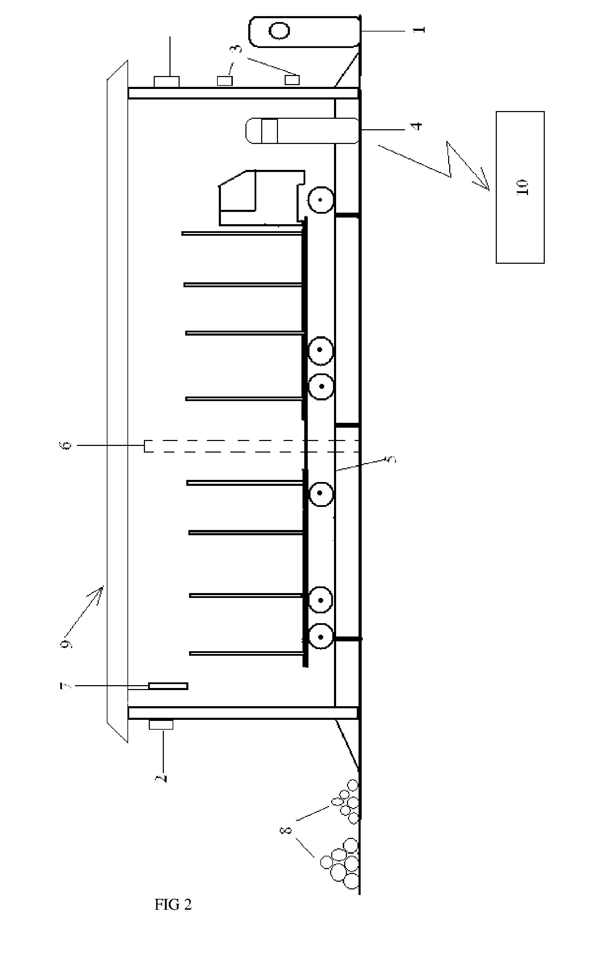

The measuring devices of the apparatus in figures 1 and 2 comprise an electronic vehicle identification apparatus (1) and a traffic light (2), measuring environment (9) and server (10).

The measuring environment (9) is an enclosed area with automatic doors, which are controlled by an electronic vehicle identification apparatus (1) and sensors (3) installed on the sides of the doorways in the measuring environment (9). The interior of the room (9) is equipped with a support frame (6) moving (from one end of the measuring environment to the other, and back) in a horizontal direction, onto which video cameras, scanners and other measuring sensors (absent from figure) have been assembled in such a manner that it is possible to scan and photograph the entire vehicle together with its load.

In one implementation there is a mobile support frame (6) and attached to it are scanners, cameras and other measuring equipment, installed in an enclosed area insulated with glass, which forms a micro environment with a specific set of parameters, in which there is a stable temperature, humidity level and protection against the crushing of scanners and cameras or some other form of damage.

The mobile support frame (6) equipped with scanners, cameras and other necessary sensors, moves in the measuring environment (9) in a horizontal direction based on parameters set in the control programme. Scanners, cameras and other necessary sensors are tightly attached to the mobile support frame (6), which means they are immobile in relation to the support frame, and their number and location of installation on the support frame were selected in such a manner that surface scanning and photographing of the entire load takes place.

In one implementation laser scanners are used, including laser ranging equipment.

In yet another implementation, echo sounder (sonar) and material density measuring technology is used to obtain a more precise measurement of load volume.

The measuring environment's (9) floor is comprised of an electronic heavy vehicle scale (5). The control computer (4), which houses the control programme, is located in the measuring environment (9), the objective of which is to control all measurement equipment including the mobile support frame (6) and the operation of integrated scanners, cameras and other measuring equipment and sensors, which supply the control computer with all necessary data, which is processed immediately. The control programme manages all operations within the measuring environment. A printer (missing from figure) is attached to the control computer (4). The control computer is also connected to the electronic identification apparatus (1), traffic light (2) and touch screen (absent from figure).

The control computer (4) forwards all processed data electronically through the data communication network to the server (10) and to the administrative programme located within. Re-recording of measurement results takes place in the server (10).

In the preferred implementation, the width of the measuring environment (9) is up to 4 metres, length up to 35 metres, and height up to 6 metres.

The person that brought/picked the goods is identified with the help of an identification apparatus (1); in the preferred implementation, identification can be performed using the driver's digital license card, smart card, the radio-frequency identification-RFID of a marked object, via the automatic reading of the license plate, etc. Following identification, the traffic light (2) attached to the outside of the measuring environment (9) is lit and the vehicle is permitted to enter the measuring environment (9) through the automatic doors (missing from drawing) controlled by sensors (3).

In one implementation, prior to the beginning of measuring, the driver uses a touch screen monitor (not pictured) to enter the necessary data of the goods, in addition to base data which has already been automatically displayed based on the data sent by the electronic vehicle identification apparatus (1). Measuring the volume of the load takes place in the measuring environment (9) in the following stages:
- stopping of motor by the driver in order to prevent vibrations during the measuring process;
- automatic registration of the total mass of the logging truck via the scale (5);
- after which the entire load is scanned using the scanners and cameras attached to the mobile support frame (6). The scanners are able to determine actual dimensions. The control programme is able to distinguish the spaces between the loggs and the actual amount of wood; by processing pictures taken from the ends of loads, the control programme is able to fix all dark spaces and calculate the coefficients of loads. In addition to determining the volume of a load, the taken pictures are compared with an assortment of sample pictures in the database, after which the assortment of goods is designated. With the aid of scanners, the possible threat or the high probability of rot is fixed and a corresponding note is added to the system.

After measurements have been taken, the data sent from different electronic information collectors is processed in the control computer (4), is saved and forwarded to the server (10). Displayed on the touch screen (not pictured) is the data for the load, and the driver is asked for approval regarding the volume, tree species and measurements. In case there is a conflict it is saved. The printer issues cargo slips to the driver, to be affixed to the unloaded load, further directions for operating in the warehouse are displayed on the screen (7) based on the parameters (loading area, etc.) prescribed in the control programme. The driver drives from the measuring environment (9) to the warehouse (8), unloads the goods, and affixes the cargo slips to the load. If the vehicle re-enters the measuring environment (9) then the kerb mass of the vehicle is registered and the difference between the masses is the weight of the load brought into the warehouse (8).

At the end, the control computer (4) issues, in paper format, a cargo declaration, while simultaneously sending the electronic cargo declaration to the server (10) and the administrative programme located therein.

Warehouse quantities, assortments, prices, the number of conflicting loads, slide presentations of loads (the goods of carriers, drivers and, if necessary, other parties) are visible in real-time to the warehouse user via the administrative programme housed in the servers.

In another implementation, upon the issuing of goods the current system fixes the quantity of goods using operations analogous to those performed during entry and grants the vehicle permission to depart. In such a case, upon the initial entry into the measuring environment, the kerb mass of the vehicle is fixed without a load.

In the control programme it is possible to designate corresponding parameters for granting permission.

In order to process data the control programme saves, in addition to the cargo declaration, specific pictures of each load, along with videos and other data, if necessary. In order to control the work of the measuring environment (9) the control programme allows each load brought into or out of the warehouse to be controlled through a specific series of pictures, which provides an excellent overview of each load. The data is archived in the system in a manner that allows the data to be processed and sorted (including pictures) for the controller in a specific uniform manner (slide presentation), and extracts to be made at any time and in any form. With such a slide presentation it is possible to review a large number of loads and, if necessary, fix conflicts within the system (such as wrong assortment, coefficient). In the warehouse it is possible to quickly locate a load that is marked by a conflict or is of interest to a controller in another manner based on data contained on cargo slips and, in addition, allows the system to open, to the full extent, the video and picture archive (viewing of saved data to the full extent) related to the load.

In order to ensure objectivity during the controlling process the system presents controlled data uniformly (in a form adjusted for the controller). Data, which is displayed for controlling, allows for the quality of each load to be controlled, including coefficient, volume, and assortment. At the same time, various administrative functions related to the load are not displayed to the controller, including the carrier's name, driver, owner, loading time, etc. In this way it is not possible for any of the related parties to affect the decision of the controller. Through the administrative programme it is possible to perform control anywhere in the world.

It is possible to adjust the system so that the system creates a random control load from among a set number of collected loads, with the aid of which the precision of the controller and the system are checked.

The system itself also automatically compares all loads and if it detects any significant differences in trends and average figures (coefficient, load size, etc.), then it raises these loads to the forefront in the system in the form of loads requiring controlling by a separate controller.

## Claims

1. Method for measuring the mechanical pulp, according to which measurements are taken of the mass of the load, the average unit diameter of the load and the length of logs based on their mass and with the aid of lasers and cameras, which is performed using apparatus prescribed for this purpose, **wherein** measuring the volume of goods with the aid of the apparatus prescribed, the measurement is performed in the following stages:
- identifing the person that brought/picked up the goods with the aid of the electronic identification device (1), after which the traffic light (2) attached to the outside of the measuring environment (9) lights up, allowing the vehicle to enter the measuring environment (9);
- registering the aggregate mass of the vehicle with the aid of the heavy goods vehicle scale (5 in the measuring environment (9), scanning the goods, filming and photographing with scanners, video cameras and other necessary sensors and measuring devices attached to the support frame (6) moving in a horizontal direction, saving the data;
- forwarding the obtained data to the control programme, where the coefficients characterising the load, assortment of goods, volume of goods and possible threat of or high probability of rot, is fixed based on the data;
- issuing cargo slips to the driver and displaying further instructions (unloading point for the load in the warehouse, etc.) for operating in the warehouse (8) by the control computer;
- upon receipt of the goods in the case of the second entry by the vehicle into the measuring environment (9) the kerb mass of the vehicle is registered and the mass of the load delivered to the warehouse is obtained from the difference between the weights, upon issuing of goods the process takes place in reverse, where the mass of the vehicle is fixed upon the initial entry into the measuring environment (9) without a load, and upon the second entry the total mass of the vehicle is fixed, with the difference being that of the issued goods;
- issuing a cargo declaration by the control programme to the driver, in paper format, while at the same time sending an electronic cargo declaration to the owner of the vehicle, the warehouse manager and other parties through the administrative programme located on the server (10), in accordance with the set parameters;
- measuring devices are directed by the control programme located in the control computer (4), which is connected to the electronic identification equipment (1), mobile support frame (6) and the scanners, cameras and other necessary measuring equipment attached to it, and the scale used for weighing in the measuring environment (9)
- the management programme is controlled through the data communication network, by the administrative programme located in the server (10).

2. Method according to claim 1, **wherein** echo sounder technology is used to scan the load.

3. Method according to claim 1, **wherein** a standing vehicle is scanned in the measuring environment (9).

4. Method according to claim 1, **wherein** computer programm product comprising the software code means for performing steps of claim 1 by the control unit.

5. Method according to any previous claims, **wherein** computer programm product comprising the software code means for performing load control through the use of photographs and videos taken of the specific loads, performing is executed by control unit.

6. Apparatus for measuring the mechanical pulp, **wherein** apparatus comprising an electronic identification system (1), measuring environment (9), which is an enclosed area with a mobile support frame (6), attached to which are cameras, scanners and other measuring equipment, the floor of which is comprised of a heavy goods vehicle scale (5) and located on the walls of which are touch screen monitors (not pictured) and a screen (7), control computer (4), in which the control programme is located, and a printer and server, in which the administrative programme is located.

7. Apparatus according to claim 6, **wherein** scanners, cameras and other measuring devices are attached to a horizontally moving support frame (6) located in the measuring environment (9).

8. Apparatus according to claim 6, **wherein** the scanners are laser scanners, including laser ranging equipment.

9. Apparatus according to claim 6, **wherein** the electronic identification apparatus (1), cameras, scanners and other measuring equipment attached to the mobile support frame (6), touch screen monitor (not pictured), sensors performing measurement in the measuring environment, such as the scale (5) and control computer (4), are connected wirelessly.

10. Apparatus according to claim 6, **wherein** the electronic identification apparatus (1), cameras, scanners and other measuring equipment attached to the mobile support frame (6), touch screen monitor (not pictured), sensors performing measurement in the measuring environment (9) such as the scale (5), and control computer (4) are connected electronically.

11. Apparatus according to claims 6-9, **wherein** the mobile support frame (6) and the cameras, scanners and other measuring devices attached to it are installed in a glass insulated enclosed area, in which a micro environment with specific parameters for measuring devices is ensured.
